(19) Europäisches Patentamt / European Patent Office / Office européen des brevets

(11) **EP 2 910 996 B1**

(12) **EUROPEAN PATENT SPECIFICATION**

(45) Date of publication and mention of the grant of the patent:
**06.09.2017 Bulletin 2017/36**

(21) Application number: **13848499.3**

(22) Date of filing: **19.12.2013**

(51) Int Cl.:
*G02B 27/22* (2006.01)      *H04N 13/04* (2006.01)
*G02F 1/13* (2006.01)      *G02B 3/00* (2006.01)

(86) International application number:
**PCT/UA2013/000150**

(87) International publication number:
**WO 2014/065773 (01.05.2014 Gazette 2014/18)**

(54) **AUTOSTEREOSCOPIC SYSTEM**

AUTOSTEREOSKOPISCHES SYSTEM

SYSTÈME AUTOSTÉRÉOSCOPIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.10.2012 UA 2012012101 U**

(43) Date of publication of application:
**26.08.2015 Bulletin 2015/35**

(73) Proprietor: **UAB "3D TAU"**
**Vilnius (LT)**

(72) Inventors:
• **ODNOROZHENKO, Vasily Borisovich**
**Dnepropetrovsk 49000 (UA)**

• **STEPANJAN, Beniamin Gurgenovich**
**Dnepropetrovsk 49000 (UA)**

(74) Representative: **Klimaitiene, Otilija**
**AAA Law**
**J. Jasinskio street 16A**
**03163 Vilnius (LT)**

(56) References cited:
WO-A1-2008/091237      UA-U- 22 927
UA-U- 22 927      US-A1- 2007 247 590
US-B2- 7 474 466

## Description

Field of Invention

The invention relates to displaying stereoscopic images and can be used in television broadcasting, computing, control and management systems, CAD, game technology, for developing training simulators, in avionics and instrument making, in science, education, medicine, etc., for solid modeling and the visual representation of static and dynamic processes in 3D for arbitrary number of free spaced viewers.

Prior Art

Creation of 3D image is still a serious technical problem. There is known a color anaglyph method, which consists in obtaining stereoscopic image with the use of two colored in additional (complementary) colors images-perspectives, which make a stereoscopic pair that then is viewed by means of glasses with light filters of different colors. When viewing stereoscopic pairs through such glasses each eye perceives only its own perspective/image. Furthermore, owing to the effect of binocular misalignment of perspectives a 3D image is created. The development of this method is limited by the discomfort to a user as regards to the necessity of using glasses and because of color aberrations.

In 1908 Gabriel Lippmann suggested a technique of recording and reconstruction of 3D image with the use of relief optical plates consisting of regularly spaced microlenses, and gave rise to the development of multicomponent approach to a three-dimensional graphics. Lippmann's idea was developed by Maurice Bonnet on a raster-type basis. Further development of this approach consists of technical solution with variations of lens reliefs or array structures, for obtaining stereoscopic images by means of a stereoscopic pair, which has been specially prepared for separation. Said preparation consists of a graphic transformation of perspectives of the stereoscopic pair so that when the image and the raster are aligned with regard to ray refraction, both perspectives are recovered separately for each eye, the so-called Lippmann-Bonnet stereogram.

There is known a technical solution according to the patent application WO 99/09750 of 25.02.1999, IPC 7 G 02 B 27/22, H 04 N 13/00 entitled "Stereoscopic Viewing System". This solution consists of a preparation of initial stereoscopic pair by Lippmann-Bonnet method, which lies in that perspectives of a stereoscopic pair are interleaved with inverted vertical stripes keeping their sequence order - in a number equal to a number of lens elements of lenticular raster, which when placed on a compressed stripe image separately recovers both perspectives - for a left eye and a right one. The implementation of this stereoscopic viewing system requires a precise positioning of optical elements of lenticular raster with respect to stripes of the prepared image.

There is known an autostereoscopic system according to the patent RU No. 2168192 of 27.05.2001, IPC 7 G 02 B 27/22, H 04 N 13/00 entitled "Visual Image Display and Procedure Forming Three-Dimensional Image". This technical solution is based on the use of an array mask consisting of separate optical elements with variable focal length arranged over a field of discrete micrographic elements - pixels (of an image) so that each pixel is positioned on an optical axis of a separate optical element. An external control of focal length of separate optical elements allows simulating differences in the depth of vision of corresponding pixels, i.e. showing stereo effect of the image as a whole. This technical solution is a complex and cumbersome one as to the number of elements and their integration into a single construction. Technical complexity decreases a reliability of the device and will inevitably extend to its cost.

The main problem of implementation of the above mentioned technical solutions is an inherent requirement of precise positioning of optical elements with respect to the elements of a specially prepared image on a visualization surface. A practical use of such systems is provided by rigid fixing of their optical elements with respect to the pixels of an image excluding mutual drift (displacement) of optical/graphical elements; therefore, such solutions actually exclude the dismountability of 2D/3D-converters.

As the main manufacturers and consumers of video products at present use 2D-format of visualization thereof, the possibility of compatibility and use of 2D-resourses for their transformation into 3D-format is an essential engineering problem.

There is known a technical solution of automatic stereoscopic system according to US patent No. 4729017 of 25.02.1986, IPC H 04 N 13/00. This technical solution comprises a display visualization surface with a specially prepared image, which is divided into pixels. The elements of optical array are positioned relative to pixels of an image and combined into autonomous array plate. When viewing the image on a surface of visualization through the array plate a stereoscopic image is shown. Therefore, a dismountable array plate provides 2D/3D-conversion of the image. However, to maintain practically a position of the array plate on the display with respect to pixels of the image is a complicated optical-mechanical problem which is solved by means of special devices, otherwise an aberration of graphics projected through the plate and the loss of stereo effect are inevitable.

There is known a technical solution of automatic stereoscopic system according to the US patent No. 2004263970 of 30.12.2004, IPC G02N 27/22 entitled "Convertible automatic stereoscopic flat panel display". This system includes a flat panel display - a visualization surface, on which there is a pixel image of a stereo pair, which has been prepared for separation by Lippmann-Bonnet method, and a dismountable screen in the form of lenticular raster arranged plane-parallel to the visualization surface. This automatic stereoscopic system comprises means (an optical test pattern in the form of an oriented slit raster on a display screen together with the device for a mechanical displacement of a dismountable screen) for adjusting (shift/rotation) of a position of a dismountable screen /its optical elements with respect to a prepared image on a visualization surface. The evident disadvantage of this system is the discomfort caused by special actions of a viewer for the adjustment of the dismountable screen position that requires time and results in inevitable loss of video information. Moreover, the application of hardware used for precise adjusting (horizontally and vertically) significantly increases the cost of products when using the known technical solution.

There is known a technical solution of automatic stereoscopic system according to the UA patent No. 14885 U, IPC G 02 B 27/22, H 04N 13/00 entitled "Automatic Stereoscopic System "StereoStep-Eclipse Method", which includes a visualization surface with a stereo pair, which has been prepared for separation, in the form of anaglyph, and a dismountable screen with raster optical structure arranged in front of visualization surface. The dismountable screen consists of two rasters disposed on opposite sides of a common focal plane, which diffuses a stream of light. Each raster consists of lens elements installed on a surface without gaps with the formation of axially arranged pairs, each of which comprises an anaglyphic filter. In the known technical solution a separation of anaglyphically prepared stereoscopic pair is made by means of a dual raster structure, which does not require a precise positioning with respect to the visualization surface. This provides a stable stereo effect with a quality of anaglyph technique, furthermore 2D/3D conversion for a viewer comes down only to attaching of a dismountable screen to the visualization surface excluding the process of the precise adjustment of a position of the dismountable screen because the dual raster optical structure may automatically adjust a stereoscopic image. Furthermore, anaglyphic representation of the stereoscopic pair due to peculiarities of forming thereof provides the arrangement of each perspective on entire visualization surface that gives a high quality of representation of each raster of stereoscopic image and, subsequently, a high precision, resolution and contrast of a stereoscopic image. However, because of the same peculiarities of anaglyphic representation of the stereoscopic pair the color aberrations are typical for stereoscopic image obtained according to the known technical solution. This is a significant disadvantage of the known technical solution of the automatic stereoscopic system.

There is known automatic stereoscopic «StereoStep-EclipsMethod», according to UA No. 22927 U of 24.01.2007, IPC G 02 B 27/22, H 04 N 13/00 (closest analogue), which comprises a visualization surface with an image prepared for separation and a dismountable screen positioned in front of the visualization surface, which contains two rasters disposed on opposite sides of the common focal plane, which diffuses a stream of light, each raster consists of lens elements disposed on the surface without gaps with the formation of axially arranged pairs, furthermore, the image consists of a sequence of m perspectives, which alternate with a frequency of no less than physiologically conditioned sensitivity of a human eye (so that to exclude image blinking), each pair is provided by m eclipse shutters, each of which opens synchronously with the sequence of each corresponding perspective. The essence of the known technical solution is in that for the separation of perspectives of the image the eclipse method is used, and for implementation of this solution m eclipse shutters (according to the number of perspectives of the image) are required for each pair of lens elements, each of which successively opens each perspective leaving the rest perspectives blacked-in. Furthermore, a synchronism of opening of perspectives with their frequency is a string requirement for the implementation of the method. The frequency shall be not less than the lower sensitivity level of a viewer's eye relative to the rate of change of the images. Dual raster structure as a multicomponent carrier of an integral image does not require a precise positioning with respect to a possible shift along the visualization surface. This provides 2D compatibility of the system and excludes the necessity of a high-priced precise adjustment of a screen at a stable quality of stereo effect reproduction. The eclipse method suggests a successive use of each perspective with the arrangement of it on the visualization surface, thus completeness, clarity and contrast of the image is provided as well as the reproduction of the whole range of colors of the image. At the same time provided is the reproduction of stereo effect for many viewers with a stable quality that may be compared with the direct viewing the screen. Furthermore, all necessary conversions of 2D unit to 3D unit for a viewer are limited to a connection (attachment) of a dismountable screen to the visualization surface, where video content is broadcasted in a structured format, i.e. in the form of sequence of perspectives, which alternate with the frequency of no less than that physiologically conditioned sensitivity of a human eye. However, a perceptibility of a distant arrangement of dual raster screen with respect to 2D visualization surface is not taken into account in the known technical solution that may result in the decrease in quality of stereoscopic image. The distance between dual raster screen and the visualization surface - display 2D-screen depends on optical features of raster optical structure and a number of perspectives, which form a stereoscopic image. Without regard to these parameters closely-spaced stripes of each perspective in Lippmann-Bonnet stereogram may include the parts of their graphics and the parts of graphics of closely-spaced perspectives and may miss a part of their graphics. Both possible defects associated with the distance result in deterioration of stereo effect. This circumstance shall be taken into account especially when making the visualization surface and dual raster screen in the form of single rigidly fixed construction.

In addition, publication WO 2008/091237 A1 discloses an autostereoscopic system of particular interest and comprising an image consisting of a sequence of perspectives, each of which alternating with a frequency that is no less than that of the physiologically-conditioned sensitivity of the human eye.

Summary of Invention

The object of invention is to produce a comfortable autostereoscopic system that provides a high quality of stereoscopy and 2D compatibility.

According to the present invention there is provided the autostereoscopic system comprising a visualization surface with an image prepared for the separation, which consists of a sequence of **m** perspectives, and each perspective alternates with a frequency of no less than physiologically conditioned sensitivity of a human eye and a dual raster screen, which is positioned in front of the visualization surface and consists of two rasters disposed on opposite sides with respect to a common focal surface, which diffuses a stream of light, and each raster consists of lens elements, which are contiguously disposed on the surface with the formation of coaxial pairs, moreover, each pair is provided with **m** eclipse shutters, each of which opens synchronously with the sequence of perspectives, according to the claimed technical solution, the dual raster screen is disposed in front of the visualization surface at a distance, at which an optical projection of a part of a raster unit $h_m = h\,/\,m$ from the common focal plane of the dual raster onto the visualization surface is equal to the raster unit **h.**

The essence of the invention lies in that on the basis of the account of interrelation between the parameters of the optical structure of autostereoscopic system determined is the distance associated with these parameters between the raster screen and the visualization surface, and in consequence of this there is provided the elimination of all possible defects associated with irregularity of a distance, and, therefore, a high quality of stereoscopic image is reliably provided.

If the condition is met when the optical projection of a part of the raster unit $h_m = h\,/\,m$ from the common focal plane of the dual raster onto the visualization surface is equal to the raster unit **h,** automatically the distance **d** between the dual raster screen and the visualization surface is determined as **d=f(h, m),** at which the parameters of the optical structure of autostereoscopic system are such that there is excluded the decrease of a stereo effect when adjacent stripes of each perspective in Lippmann-Bonnet stereogram may include crossing parts of their graphics or miss a part of their graphics.

Therefore, the total number of essential features of the claimed technical solution solves the problem being set up: development of a comfortable autostereoscopic system that provides a high quality of stereoscopy and 2D compatibility.

As the result of the advanced search in a patent scientific and technical literature according to the corresponding IPC and UDC the total number of essential distinctions, which fully or partially coincide with the claimed object and allows solving the problem, has not been found in any of the technical solutions.

Therefore the claimed technical solution meets the "novelty" criterion.

The set of features of the claimed technical solution does not follow from the prior art. Therefore, the claimed technical solution meets the "inventive step" criterion.

Brief description of drawings

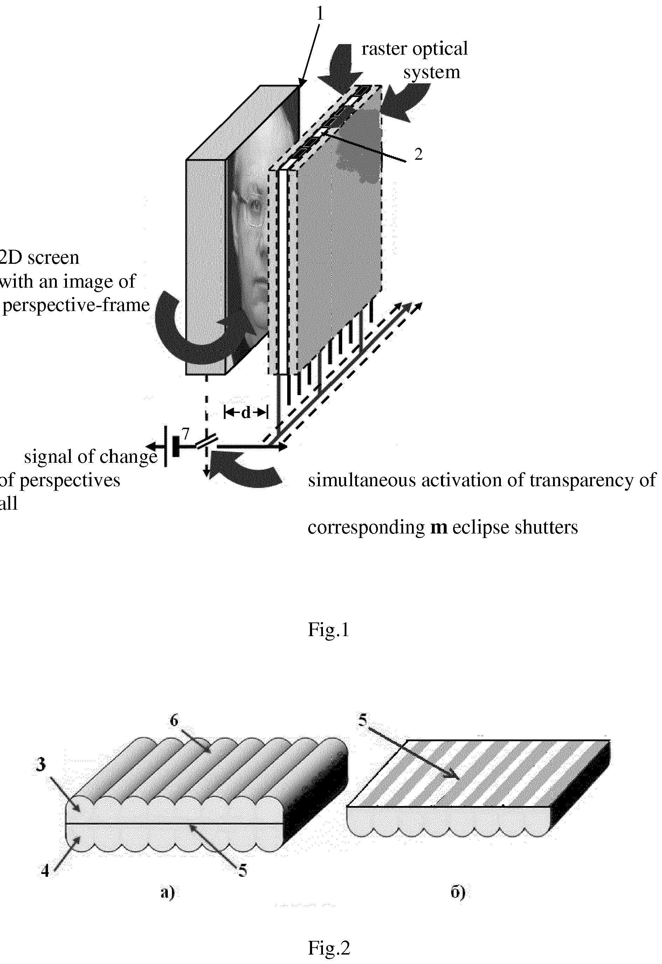

Fig. 1 shows an autostereoscopic system (general view);
Fig. 2 shows a construction of a dual raster screen (a variant of a lenticular rasters), (a) - the dual raster construction as an assembly, (b) - components of the dual raster screen;

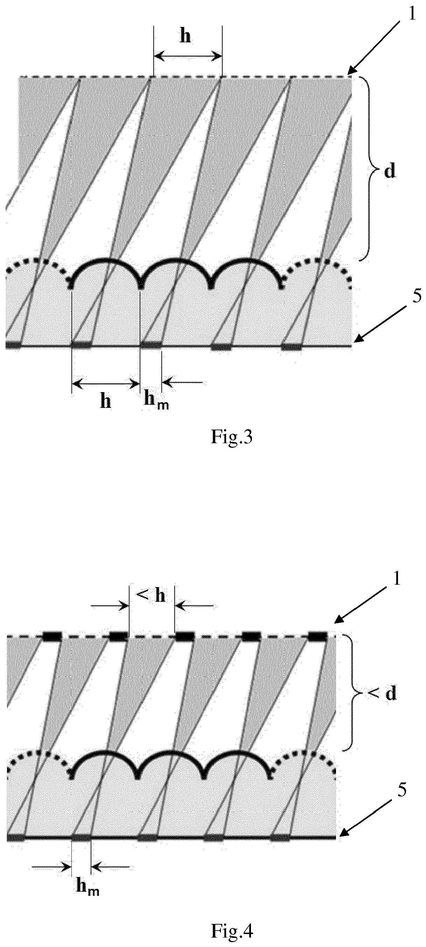

Fig. 3 shows an optical structure of the autostereoscopic system, wherein an optical projection of a part of a raster unit $h_m = h\,/\,m$ from a common focal plane of the dual raster onto a visualization surface is equal to a raster unit **h;**
Fig. 4 shows the optical structure of the autostereoscopic system, wherein the optical projection of a part of the raster unit $h_m = h\,/\,m$ from the common focal plane of the dual raster onto the visualization surface is less than the raster unit **h;**

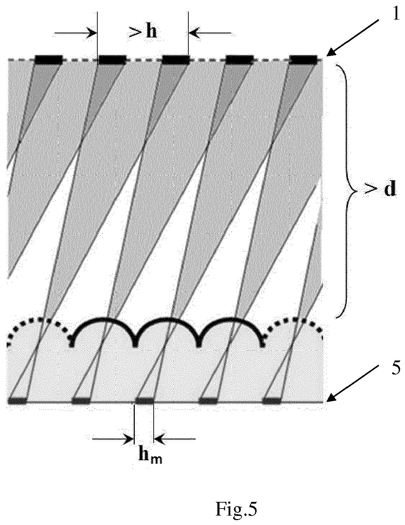

Fig. 5 shows the optical structure of the autostereoscopic system, wherein the optical projection of a part of the raster unit $h_m = h\,/\,m$ from the common focal plane of the dual raster onto the visualization surface is more than the raster unit **h.**

Description of embodiments of invention

Claimed autostereoscopic system has undergone model and laboratory tests at the Engineering Agency "ANTENNET" that is supported by examples of particular embodiment.

The autostereoscopic system includes a visualization surface (1) with an image prepared for a separation and a screen (2) with a raster optical system arranged in front of a visualization surface (1). The screen (2) consists of two rasters (3), (4) disposed on opposite sides with respect to a common focal plane (5) which diffuses a stream of light. Each of the two rasters (3), (4), consists of lens elements (6) which are contiguously disposed on the surface and form a pair of lens elements with a common optical axis. The frame changing frequency of sequence of m perspectives is not less than physiologically conditioned sensitivity of a human eye (12 Hz). Each pair of coaxial lens elements is provided by **m** eclipse shutters combined into a matrix and is controlled by an electronic circuit (7), which provides the sequence and the synchrony of its operation with the frame and perspective change. The matrix of eclipse shutters is arranged in the common focal plane (5) of the dual raster system. The focusing and orientation of each perspective are accomplished by the optical raster system, while the eclipse shutter provides that the corresponding perspectives appear in the corresponding parts of the raster system. The control of the matrix of eclipse shutters is carried out by any known method, for example, if a matrix of liquid crystal elements is used as the matrix of eclipse shutters a control is carried out by application of electric voltage.

Autosterescopic system operates as follows:

A monitoring signal synchronized with the frame-perspective change simultaneously activates a transparency mode for selected eclipse shutters in each pair of coaxial lens elements. In this case non-selected eclipse elements are not transparent. Through transparent shutters the focused fragments of an image from corresponding lens elements of an object raster are recovered by lens elements of ocular raster and are combined for a viewer into a single visual field - a current full screen image of a perspective, which is oriented for a corresponding (right or left) eye. The next monitoring signal simultaneously activates the transparency mode for another selected group of eclipse shutters (a number of groups depends on the number of perspectives), and all other eclipse shutters become/remain nontransparent. In this case a full image is created for the second eye of the viewer provided that the requirements to frames-perspectives changing frequency are met. Therefore, a stereoscopic pair of a stereoscopic image is created, and the viewer sees a 3D picture in the frame.

The distance **d** between the raster screen and the visualization surface as a function **d = f (h, m)** is calculated based on geometrical optics according to particular lenses, for example, when lenticulars are used as rasters:

$$d=(0{,}0254/2\ell)[(m-n+1)/(n-1)]$$

Where

$\ell$ - a number of lenses per 2.54 cm (1 inch) of a raster,
**m** - a number of perspectives,
**n** - refraction coefficient of raster material.

From the side of the visualization surface the dual raster plate is provided by a calibrating retainer, which determines this distance. The calibrating retainer may be made of any optically-neutral material in the form of a plate of defined thickness, in the form of local retainers of the same material, including, as stiffening ribs for the dual raster.

As the result of this the optical structure of the autosterescopic system has the interrelation of parameters, at which an optical projection of a part of a raster unit $h_m = h / m$ from the common focal plane of the dual raster onto the visualization surface is equal to a raster unit **h,** hence a stable high quality of stereoscopic image is provided.

## Claims

1. Autostereoscopic system comprising a visualization surface (1) provided with an image that has been prepared for separation, said image consisting of a sequence of **m** perspectives, each of which alternates with the frequency of no less than the physiologically conditioned sensitivity of a human eye, and a dual raster screen (2) positioned in front of the visualization surface (1) and consisting of two rasters (3, 4) disposed on opposite sides with respect to a common focal plane (5) which diffuses a stream of light, and each raster consists of lens elements (6), which are contiguously disposed on the visualization surface (1) and form coaxial pairs, furthermore, each pair is provided with m eclipse shutters, each of which opens synchronously with the sequence of perspectives, *characterized in that* the dual raster screen (2) is disposed in front of the visualization surface (1) at a distance, at which the optical projection of a part of a raster unit $h_m = h / m$ from the common focal plane (5) of the dual raster (3, 4) onto the visualization surface(1) is equal to a raster unit **h.**

## Patentansprüche

1. Das autostereoskopische System besteht aus einer Visualisierungsoberfläche (1)
versehen mit
einem Bild, welches für die Trennung angefertigt wurde; besagtes Bild besteht aus einer Abfolge von **m** Perspektiven, von welcher jede die Frequenz wechselt, niemals weniger als die
physiologisch konditionierte Empfindlichkeit des menschlichen Auges, und aus einem doppelter Rasterschirm (2), welcher
vor der Visualisierungsoberfläche positioniert ist (1) und aus zwei Rastern (3,4)
besteht, die auf gegenüberliegenden Seiten hinsichtlich der Bildebene (5)
angeordnet sind, und welches ein helles Licht verbreitet. Jedes Raster besteht aus Linsenelementen (6),
welche laufend an
der Visualisierungsoberfläche (1)
angeordnet sind und welche gleichachsige Paare bilden. Darüber hinaus, ist jedes Paar mit einem **m** Verdunkelungsverschluss ausgestattet, die sich gleichzeitig mit der Abfolge der Perspektiven zusammen öffnen, dies ist **dadurch gekennzeichnet, dass** der doppelte Rasterschirm (2) vor der Visualisierungsoberfläche (1) angebracht ist und zwar in einer Distanz, bei welcher die optische Projektion eines Teils der Rastereinheit $h_m = h/m$ von der allgemeinen Bildebene (5) des doppelten Rasters (3,4) gleich zu der Rastereinheit **h** ist.

**Revendications**

1.  Système autostéréoscopique comprenant une interface de visualisation (1) auquel ont été intégrés une image ayant été préparée pour la séparation et constituée d'une séquence de perspectives **m,** chacune de ces séquences alternant à la fréquence minimum de la sensibilité physiologique de l'oeil humain et un écran à accès matriciel double (2) placé en face de l'interface de visualisation (1), composé de deux trames (3,4) disposées face à face sur un plan focal commun (5), lequel diffuse un flux de lumière chaque trame est composée d'éléments lenticulaires (6) qui sont disposés de manière contigüe sur l'interface de visualisation (1) ;
    les trames forment des paires coaxiales de plus, chaque paire est équipée d'obturateurs à éclipse **m,** chaque obturateur s'ouvrant en synchronisation avec la séquence de perspectives,
    *se caractérisant* **par** la disposition de l'écran à accès matriciel double (2) face à l'interface de visualisation (1)
    à une distance telle que la projection optique d'une partie de l'unité de trame $h_m = h / m$ depuis le plan focal commun (5) de la trame double (3, 4)
    sur l'interface de visualisation (1)
    est égale à une unité de trame **h.**

raster optical system

2D screen
with an image of
perspective-frame

signal of change
of perspectives
all

simultaneous activation of transparency of

corresponding **m** eclipse shutters

Fig.1

a)                                б)

Fig.2

Fig.3

Fig.4

Fig.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9909750 A
- RU 2168192
- US 4729017 A
- US 2004263970 A
- UA 14885 U
- UA 22927 U
- WO 2008091237 A1